# EUROPÄISCHE PATENTSCHRIFT

(11) **EP 4 336 062 B1**
(45) Veröffentlichungstag und Bekanntmachung des Hinweises auf die Patenterteilung: **12.11.2025**
(21) Anmeldenummer: 22194167.7
(22) Anmeldetag: 06.09.2022
(51) Int. Cl.: F16D 65/18

(54) **ELEKTROMAGNETISCH BETÄTIGBARE KUPPLUNG, BREMSE ODER KUPPLUNGS-BREMS-KOMBINATION**
ELECTROMAGNETICALLY ACTUATED CLUTCH, BRAKE OR CLUTCH BRAKE COMBINATION
EMBRAYAGE À COMMANDE ÉLECTROMAGNÉTIQUE, FREIN OU COMBINAISON D'EMBRAYAGE ET DE FREIN

(43) Veröffentlichungstag der Anmeldung: 13.03.2024
(73) Patentinhaber: Ortlinghaus-Werke GmbH, 42929 Wermelskirchen (DE)
(72) Erfinder: Bade, Michael, 42929 Wermelskirchen (DE)
(74) Vertreter: Brinkmann & Partner

(56) Entgegenhaltungen:
- WO-A1-2019/007931
- DE-A1- 102008 024 180
- US-A- 5 796 192
- US-A1- 2006 219 497

## Beschreibung

Die Erfindung betrifft eine elektromagnetisch betätigbare Kupplung, Bremse oder Kupplungs-Brems-Kombination mit einem Elektromagneten, der ein Magnetgehäuse und einen davon aufgenommenen Spulenkörper aufweist, einer auf einer Welle axial verschieblich, gleichwohl aber verdrehfest anordbaren Kupplungs- oder Bremsscheibe, einer zwischen dem Magnetgehäuse und der Kupplungs- oder Bremsscheibe angeordneten Ankerplatte und einem verdrehfest am Magnetgehäuse angeordneten Deckel, wobei die Ankerplatte und die Kupplungs- oder Bremsscheibe zwischen dem Magnetgehäuse und dem Deckel angeordnet sind.

Elektromagnetisch betätigbare Kupplungen, Bremsen oder Kupplungs-Brems-Kombinationen der eingangs genannten Art sind aus dem Stand der Technik an sich gut bekannt, weshalb es eines gesonderten druckschriftlichen Nachweises an dieser Stelle nicht bedarf. Es wird deshalb auch nur beispielhaft auf die WO 2019/007931 A1 verwiesen, die eine gattungsgemäße Konstruktion am Beispiel einer Federkraftbremse offenbart.

Die aus der WO 2019/007931 A1 vorbekannte Federkraftbremse verfügt über einen Elektromagneten. Dieser weist ein Magnetgehäuse sowie einen Spulenkörper auf, wobei der Spulenkörper vom Magnetgehäuse aufgenommen ist. Zu diesem Zweck verfügt das Magnetgehäuse über einen entsprechenden Aufnahmeraum, insbesondere in der Ausgestaltung eines Ringraums. Der Spulenkörper ist ringförmig ausgebildet und im endmontierten Zustand vom Ringraum des Magnetgehäuses aufgenommen. US 5796192 A zeigt ein Bremsgehäuse mit separaten Ringräume für Spülenkörper und Steuerelektronik.

Die Federkraftbremse verfügt des Weiteren über eine Bremsscheibe. Diese Bremsscheibe - allgemeiner auch Reibscheibe genannt - ist im endmontierten Zustand auf einer Welle angeordnet, beispielsweise auf der Ausgangswelle eines Elektromotors, und zwar verdrehfest, gleichwohl aber in axialer Richtung der Welle verschiebbar. Im bestimmungsgemäßen Verwendungsfall verdreht die Bremsscheibe mithin zusammen mit der Welle, kann sich aber in axialer Richtung der Welle relativ zur Welle bewegen.

Es ist des Weiteren eine Ankerplatte vorgesehen. Diese ist zwischen der Bremsscheibe einerseits und dem Magnetgehäuse andererseits angeordnet. Dabei ist die Ankerplatte gegenüber dem Magnetgehäuse verdrehfest, in axialer Richtung aber verschieblich ausgebildet, und zwar unter Zwischenordnung von Druckfederelementen. Im bestimmungsgemäßen Verwendungsfall kann sich die Ankerplatte mithin in axialer Richtung bewegen, ist aber verdrehfest am Magnetgehäuse angeordnet.

Des Weiteren verfügt die Bremse über einen Deckel, der verdrehfest am Magnetgehäuse angeordnet ist. Dabei sind die Ankerplatte und die Bremsscheibe in axialer Richtung zwischen dem Magnetgehäuse und dem Deckel angeordnet.

Hinsichtlich der vorbeschriebenen Konstruktion kann im bestimmungsgemäßen Anwendungsfall zwischen einer Bestromung und einer Nichtbestromung des Spulenkörpers des Elektromagneten unterschieden werden.

Bei einer Nichtbestromung des Spulenkörpers drücken die sich am Magnetgehäuse abstützenden Druckfederelemente die Ankerplatte gegen den Deckel, und zwar unter Einklemmung der Bremsscheibe. Infolgedessen ist die Bremsscheibe reibschlüssig zwischen dem Deckel und der Ankerplatte druckfederelementbelastet eingeklemmt, wobei eine erste Reibpaarung durch den Deckel und die Bremsscheibe und eine zweite Reibpaarung durch die Bremsscheibe und die Ankerplatte gegeben sind. Der so im Fall einer Nichtbestromung des Spulenkörpers entstehende Reibschluss führt zu einem Stillsetzen der Kupplungs- oder Bremsscheibe und damit auch zu einem Stillsetzen der mit der Kupplungs- oder Bremsscheibe in Wirkverbindung stehenden Welle, beispielsweise der Ausgangswelle eines Elektromotors.

Im Falle einer Bestromung des Spulenkörpers führt dies zu einer Magnetisierung des Magnetgehäuses des Elektromagneten. Infolgedessen kommt es zu einem magnetischen Anziehen der Ankerplatte durch das Magnetgehäuse, und zwar entgegen der auf die Ankerplatte einwirkenden Druckfederelemente. Infolgedessen wird die reibschlüssige Festklemmung der Bremsscheibe zwischen Deckel und Ankerplatte aufgehoben und die Bremsscheibe wird freigegeben. Eine mit der Bremsscheibe in Wirkverbindung stehende Welle kann in dieser Stellung der Ankerplatte frei drehen, weil die damit kraftgekoppelte Bremsscheibe im Spalt zwischen Deckel und Ankerplatte frei beweglich ist.

Obgleich sich die vorbeschriebene Konstruktion im alltäglichen Praxiseinsatz bewährt hat, besteht ein ständiger Verbesserungsbedarf. Es ist insbesondere erwünscht, eine kompakte Bauform einer gattungsgemäßen Kupplung, Bremse oder Kupplungs-Brems-Kombination zu ermöglichen, und dies bei verringerten Herstellkosten. Es ist deshalb ausgehend vom Vorbeschriebenen die der Erfindung zugrundeliegende **Aufgabe,** eine gattungsgemäße Kupplung, Bremse oder Kupplungs-Brems-Kombination konstruktiv dahingehend weiterzuentwickeln, dass bei gleichzeitig verringerten Herstellkosten eine möglichst kompakte Bauform gewährleistet ist.

Zur **Lösung** dieser Erfindung wird eine gattungsgemäße Kupplung, Bremse oder Kupplungs-Brems-Kombination vorgeschlagen, die sich durch eine integrierte Steuerelektronik auszeichnet.

Im bestimmungsgemäßen Betriebsfall bedarf es zur Betätigung der Kupplung, Bremse oder Kupplungs-Brems-Kombination einer Bestromung des Elektromagneten. Dies erfolgt bei einer Spannung von z. B. 24 V. Dabei ist der Spulenkörper in seiner Größenausgestaltung derart ausgelegt, dass die Ankerplatte sicher bewegt und dabei der Luftspalt zwischen Ankerplatte und Magnetgehäuse überwunden werden kann. Da der Luftspalt magnetisch isolierend wirkt, ist eine entsprechende Spannung anzulegen, um diesen Anfangswiderstand auch entgegen der auf die Ankerplatte einwirkenden Druckfederelementen zu überbrücken. Sobald die Ankerplatte angezogen ist und am Magnetgehäuse anliegt, der Luftspalt zwischen Magnetgehäuse und Ankerplatte mithin überwunden ist, wird für eine positionssichere Anordnung der Ankerplatte am Magnetgehäuse weniger Spannung als zu Beginn der Ankerplattenbewegung benötigt. Typischerweise wird zum Offenhalten der Kupplung, Bremse oder Kupplungs-Brems-Kombination nur noch ein Viertel der Spannung der ursprünglich zur Überbrückung des Anfangswiderstands angelegten Spannung benötigt. Bei einem auf 24 V ausgelegten Spulenkörper sind dies 6 V.

Um hinsichtlich des Energieverbrauchs zwischen einem Öffnen der Kupplung, Bremse oder Kupplungs-Brems-Kombination einerseits und einem Offenhalten einer geöffneten Kupplung, Bremse oder Kupplungs-Brems-Kombination andererseits unterscheiden zu können, ist aus dem Stand der Technik der Einsatz einer entsprechenden Steuerelektronik bekannt. Diese sorgt dafür, dass im Falle eines Öffnens der Kupplung, Bremse oder Kupplungs-Brems-Kombination eine entsprechende Spannung anliegt, wobei nach einem Öffnen der Kupplung, Bremse oder Kupplungs-Brems-Kombination zum Offenhalten der Kupplung, Bremse oder Kupplungs-Brems-Kombination auf eine niedrigere Spannung umgeschaltet wird. Bei einem gleichzeitig sicheren Betrieb der Kupplung, Bremse oder Kupplungs-Brems-Kombination ist so ein minimierter Energieverbrauch in vorteilhafter Weise ermöglicht.

Die nach dem Stand der Technik zum Einsatz kommende Steuerelektronik ist in einem dafür vorgesehenen Gehäuse untergebracht, welches entweder an der Kupplung, der Bremse oder der Kupplungs-Brems-Kombination selbst oder an einem dritten Bauteil angeordnet ist. Dabei erweist sich insbesondere von Nachteil, dass eine entsprechende Verkabelung von Nöten ist und dass es eines entsprechenden Einbauraums bedarf. Der Austausch einer Kupplung, Bremse oder Kupplungs-Brems-Kombination ohne Steuerelektronik gegen eine Kupplung, Bremse oder Kupplungs-Brems-Kombination mit Steuerelektronik ist deshalb je nach zur Verfügung stehendem Bauraum nicht oder nicht ohne Weiteres möglich, sodass vergleichsweise hohe Betriebskosten in nachteiliger Weise die Folge sind.

Die erfindungsgemäße Ausgestaltung schafft hier Abhilfe, da die Steuerelektronik als integraler Bestandteil der Kupplung, Bremse oder Kupplungs-Brems-Kombination ausgebildet ist. In Abkehr zum Stand der Technik findet also kein separates Steuergerät Verwendung, sondern es ist vielmehr vorgesehen, ein Gesamtsystem aus Kupplung, Bremse oder Kupplungs-Brems-Kombination einerseits und Steuerelektronik andererseits zur Verfügung zu stellen. Es ist so in vorteilhafter Weise ein äußerst kompakter Aufbau realisiert, sodass ein nur noch verhältnismäßig kleiner Bauraum von Nöten ist. Es ist so insbesondere der Austausch von Kupplungen, Bremsen oder Kupplungs-Brems-Kombinationen ohne Steuerelektronik gegen eine erfindungsgemäße Kupplung, Bremse oder Kupplungs-Brems-Kombination gestattet.

Darüber hinaus ist von Vorteil, dass bei einer Installation einer erfindungsgemäßen Kupplung, Bremse oder Kupplungs-Brems-Kombination eine Verkabelung der Steuerelektronik mit dem Spulenkörper gänzlich entfällt, da die Steuerelektronik als integraler Bestandteil der Kupplung, Bremse oder Kupplungs-Brems-Kombination herstellerseits bereits bestimmungsgemäß mit dem Spulenkörper verschaltet ist. Ein einfaches Anschließen der Kupplung, Bremse oder Kupplungs-Brems-Kombination an eine Stromversorgung und/oder eine Datenleitung ist völlig ausreichend, was die Montage aber auch eine mögliche Demontage im Reparaturfall vor Ort erheblich vereinfacht.

Eine Kostenersparnis entsteht im Übrigen auch dadurch, dass kein zusätzliches Gehäuse für die Steuerelektronik benötigt wird.

Im Ergebnis wird mit der erfindungsgemäßen Kupplung, Bremse oder Kupplungs-Brems-Kombination eine Konstruktion vorgeschlagen, die bei gleichzeitiger Reduzierung der Herstell- und Montagekosten eine kompakte Bauform aufweist, was eine vereinfachte Handhabung und eine Unterbringung auch in vergleichsweise kleinen Einbauräumen ermöglicht.

Die erfindungsgemäße Ausgestaltung ist vorstehend am Beispiel einer "federschließenden" Kupplung, Bremse oder Kupplungs-Brems-Kombination erläutert worden. Die Erfindung kann aber in gleichem Maße auch für "elektromagnetisch schließende" Kupplungen, Bremsen oder Kupplungs-Brems-Kombinationen Verwendung finden. Dabei schließen "elektromagnetisch schließende" Kupplungen, Bremsen oder Kupplungs-Brems-Kombinationen nicht durch Federkraft, sondern infolge einer Bestromung des Elektromagneten. Ein Öffnen der Kupplung, Bremse oder Kupplungs-Brems-Kombination wird dementsprechend bei Nichtbestromung des Elektromagneten durch Federkraft bewirkt. "Federschließende" Kupplungen, Bremsen oder Kupplungs-Brems-Kombinationen auf der einen Seite und "elektromagnetisch schließende" Kupplungen, Bremsen oder Kupplungs-Brems-Kombinationen auf der anderen Seite arbeiten mithin nach dem gleichen Funktionsprinzip und unterscheiden sich nur in der Wirkrichtung der Federanordnung einerseits und des Elektromagneten andererseits. Die erfindungsgemäße Unterbringung der Steuerelektronik als integraler Bestandteil der Kupplung, Bremse oder Kupplungs-Brems-Kombination ist auf beide Wirkungsweisen aber in gleicher Weise anwendbar.

Gemäß der Erfindung ist vorgesehen, dass das Magnetgehäuse einen Ringraum bereitstellt, der den Spulenkörper beherbergt, wobei die Steuerelektronik vom Ringraum aufgenommen ist.

Gemäß dieser besonders bevorzugten Ausführungsform der Erfindung ist vorgesehen, dass der ohnehin zur Beherbergung des Spulenkörpers vorgesehene Ringraum dazu genutzt wird, die Steuerelektronik aufzunehmen. Dies gestattet den Einsatz herkömmlicher Magnetgehäuse. Eine besondere Umgestaltung oder Ausbildung des Magnetgehäuses zur integrativen Aufnahme der Steuerelektronik ist mithin nicht erforderlich.

Die Steuerelektronik macht es möglich, hinsichtlich der Bestromung des Spulenkörpers zwischen einem Öffnen der Kupplung, Bremse oder Kupplungs-Brems-Kombination einerseits und einem Offenhalten der Kupplung, Bremse oder Kupplungs-Brems-Kombination andererseits unterscheiden zu können. Dies macht es wiederum möglich, den Spulenkörper in seinen geometrischen Abmessungen kleiner zu dimensionieren, da dieser nicht dafür ausgelegt sein muss, stets unter Volllast bestromt zu werden, wie dies im Öffnungsfall erforderlich ist. Es ist deshalb auch gestattet, trotz Wahrung einer bestimmungsgemäßen Funktionalität der Kupplung, Bremse oder Kupplungs-Brems-Kombination den Spulenkörper in seinen geometrischen Abmessungen kleiner auszugestalten, insbesondere kleiner als der vom Ringraum des Magnetgehäuses bereitgestellte Aufnahmeraum. Hierdurch ist es ermöglicht, dass der vom Magnetgehäuse ohnehin zur Aufnahme des Spulenkörpers vorgesehene Ringraum dazu geeignet ist, nicht nur den Spulenkörper, sondern auch die Steuerelektronik aufzunehmen, womit eine erfindungsgemäße Integration der Steuerelektronik in die Kupplung, Bremse oder Kupplungs-Brems-Kombination in besonders einfacher Weise realisiert ist. Es ist insbesondere gestattet, standardisierte Magnetgehäuse zu verwenden, die mit einem in seinen geometrischen Abmessungen kleiner dimensionierten Spulenkörper ausgerüstet sind. Der durch die kleinere Dimensionierung des Spulenkörpers geschaffene Freiraum dient der integrativen Aufnahme der Steuerelektronik.

Gemäß einem weiteren Merkmal der Erfindung ist vorgesehen, dass die Steuerelektronik in einem Ringspalt zwischen dem Spulenkörper und einem das Magnetgehäuse begrenzenden Gehäuseboden angeordnet ist. Im endmontierten Zustand befindet sich die Steuerelektronik mithin sandwichartig zwischen dem Spulenkörper einerseits und einem den Ringraum des Magnetbodens begrenzenden Gehäuseboden. Die Steuerelektronik ist damit in vorteilhafter Weise vor mechanischen Krafteinwirkungen geschützt untergebracht, und zwar zwischen Gehäuseboden einerseits und Spulenkörper andererseits.

Obwohl es eine bevorzugte Ausführungsform nach der Erfindung ist, im Ringraum des Magnetgehäuses nicht nur den Spulenkörper, sondern auch die Steuerelektronik unterzubringen, kann die Steuerelektronik auch an anderer Stelle angeordnet oder untergebracht sein. Von erfindungswesentlicher Bedeutung ist insofern, dass die erfindungsgemäße Kupplung, Bremse oder Kupplungs-Brems-Kombination über eine integrierte Steuerelektronik verfügt. So kann beispielsweise auch ein separat zum Ringraum ausgebildeter Aufnahmeraum vorgesehen sein, der die Steuerelektronik beherbergt. Ein solcher Aufnahmeraum kann in Höhenrichtung der Kupplung, Bremse oder Kupplungs-Brems-Kombination entweder unterhalb des Ringraums oder dazu nebengeordnet ausgebildet sein. Dabei können Ring- und Aufnahmeraum ineinander übergehen oder als voneinander separierte und somit baulich getrennte Räume ausgebildet sein. Bevorzugt ist es indes, einen Aufnahmeraum für die Steuerelektronik innerhalb des Magnetgehäuses auszubilden.

Gemäß einem weiteren Merkmal der Erfindung ist vorgesehen, dass die Steuerelektronik von einer Platine getragen ist, die kreisringförmig, vorzugsweise viertelkreisringförmig ausgebildet ist. Diese die Steuerelektronik bereitstellende Platine kann in einfacher Weise gehandhabt und in den Ringraum des Magnetgehäuses eingesetzt werden. Dabei ist es zur Unterbringung der Steuerelektronik ausreichend, die Platine viertelkreisringförmig auszugestalten. Aber auch andere Kreisringformen sind natürlich denkbar. Von Bedeutung ist in diesem Zusammenhang allein, dass die die Steuerelektronik tragende Platine in einfacher Weise in dem vom Magnetgehäuse bereitgestellten Ringraum zur Aufnahme des Spulenkörpers untergebracht werden kann, und zwar zwischen dem Gehäuseboden einerseits und dem Spulenkörper andererseits.

Die Platine weißt vorzugsweise geometrische Abmessungen auf, die eine möglichst spaltfreie Anordnung der Platine im Ringraum ermöglichen, womit eine positionssichere Anordnung gewährleistet ist. Die Platine ist mithin in ihren geometrischen Abmessungen korrespondierend zum Ringraum ausgebildet.

Die Steuerelektronik besteht im Übrigen aus einem Mikrocontroller, der den Spulenkörper der Kupplung oder Bremse über eine H-Brücke ansteuert. Die H-Brücke wird über eine Pulsweitenmodulation angesteuert. So ist es möglich, unterschiedliche Ströme zu stellen. Der gestellte Strom wird gemessen und kann so geregelt werden. Auch die Spannung am Eingang der Steuerelektronik wird gemessen. Der Mikrocontroller wird über Digitalsignale oder auch über einen Datenbus angesteuert.

Durch diese Stromregelung ist es möglich, die Kupplung, Bremse oder Kupplungs-Brems-Kombination besser zu kontrollieren, den Strom abzusenken beim Offenhalten der Kupplung, Bremse oder Kupplungs-Brems-Kombination oder durch eine Stromkurve, z. B. schnell zu schalten. Über den Verlauf von Strom und Spannung können weitere Überwachungen und Diagnosemöglichkeiten realisiert werden, wie z. B. eine Überlastungserkennung. Durch weitere Sensoren, wie z. B. Beschleunigungssensoren oder Hallsensoren sind zusätzliche Diagnosen und Überwachungsfunktionen realisierbar.

Gemäß einem weiteren Merkmal der Erfindung ist vorgesehen, dass die Steuerelektronik in eine Vergussmasse eingegossen ist. Dabei besteht die Vergussmasse vorzugsweise aus Kunststoff.

Von Vorteil dieser konstruktiven Maßnahme ist insbesondere die positionssichere Anordnung der Steuerelektronik im Magnetgehäuse. Darüber hinaus ist die Steuerelektronik zusätzlich geschützt, und dies nicht nur vor mechanischer Einwirkung von außen, sondern auch vor einem ungewollten Flüssigkeitseintrag. Ein dauerhaft sicherer Betrieb ist so in vorteilhafter Weise gewährleistet.

Gemäß einem weiteren Merkmal der Erfindung ist vorgesehen, dass die Steuerelektronik an eine Spannungsversorgung und an eine Datenleitung angeschlossen ist, wobei die dafür vorgesehenen Kabel durch eine Öffnung im Magnetgehäuse hindurchgeführt sind. Es ist so in denkbar einfacher Weise ein bestimmungsgemäßer Anschluss der Steuerelektronik an eine Datenleitung und an einer Spannungsversorgung möglich. Dabei ist in Abkehr zum Stand der Technik kein externes Gehäuse vorgesehen, sondern es sind lediglich die für einen bestimmungsgemäßen Anschluss vorgesehenen Kabel aus dem Magnetgehäuse herausgeführt, die im Montagefall anzuschließen sind. Dabei weist das Magnetgehäuse in schon vorbeschriebener Weise im Unterschied zum Stand der Technik keine größeren Abmessungen auf, obgleich das Gehäuse die Steuerelektronik integrativ aufnimmt. Damit ist auch bei einer Bestandsanordnung der zur Verfügung stehende Bauraum für eine erfindungsgemäße Kupplung oder Bremse hinreichend groß genug ausgebildet.

Im Falle einer erfindungsgemäß ausgebildeten Bremse ist eine Ankerplatte vorgesehen, die gegenüber dem Magnetgehäuse unter Zwischenordnung von Druckfederelementen axial verschieblich, gleichwohl aber verdrehfest am Montagegehäuse angeordnet ist. Bei einer erfindungsgemäß ausgebildeten Kupplung kann die Ankerplatte indes mitverdrehen. Sie ist mithin im Unterschied zur Ankerplatte einer Bremse nicht verdrehfest ausgebildet. Wie sich aus den vorstehenden Darlegungen ergibt, ist die erfindungsgemäße Ausgestaltung gleichermaßen für Kupplungen, Bremsen und/oder Kupplungs-Brems-Kombinationen verwendbar, da es unabhängig von der Wirkungsweise und/oder der Anordnung der Ankerplatte im Vergleich zum Magnetgehäuse allein darauf ankommt, dass die Steuerelektronik in die Kupplung, Bremse oder Kupplungs-Brems-Kombination integriert ist, womit sich die vorstehend erläuterten Vorteile ergeben.

Anstelle einer Kupplungs- oder Bremsscheibe, das heißt einer Reibscheibe können auch miteinander in Wirkverbindung stehende Lamellenpakete vorgesehen sein. Die Erfindung ist insofern nicht auf die Ausbildung nur einer Kupplungs- oder Bremsscheibe, das heißt Reibscheibe beschränkt.

Weitere Merkmale und Vorteile der Erfindung ergeben sich aus der nachfolgenden Beschreibung anhand der Figuren. Dabei zeigen
- Fig. 1: in schematischer perspektivischer Schnittdarstellung eine erfindungsgemäße Ausgestaltung am Beispiel einer elektromagnetisch betätigbaren Bremse;
- Fig. 2: in schematischer Schnittdarstellung das Magnetgehäuse der Bremse nach Fig. 1 und
- Fig. 3: in schematischer Schnittdarstellung ein weiteres Ausführungsbeispiel einer elektromagnetisch betätigbaren Bremse.

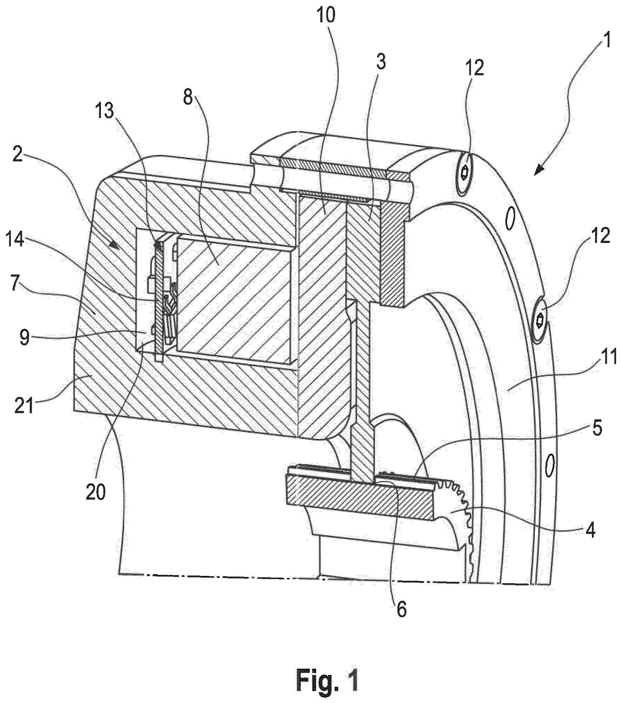

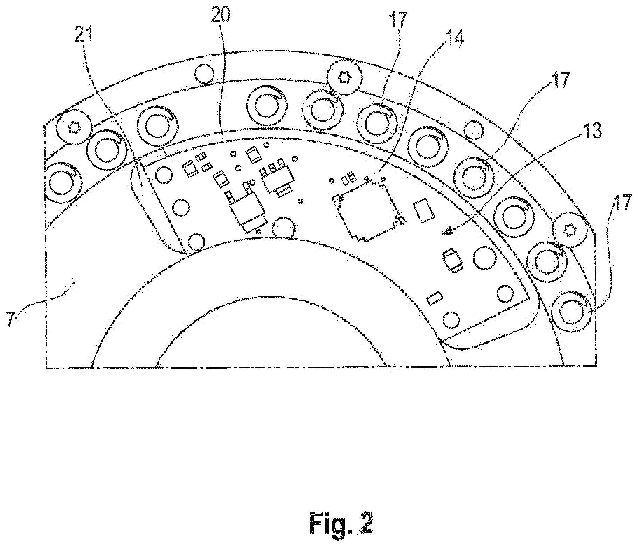

Die Figuren 1 und 2 lassen eine erste Ausführungsform am Beispiel einer elektromagnetisch betätigbaren Bremse 1 nach der Erfindung erkennen.

Die Bremse 1 verfügt über einen Elektromagneten 2. Dieser weist ein Magnetgehäuse 7 sowie einen Spulenkörper 8 auf. Dabei stellt das Magnetgehäuse 7 einen Ringraum 9 bereit, der im endmontierten Zustand den Spulenkörper 8 beherbergt.

Die Bremse 1 verfügt des Weiteren über eine Bremsscheibe 3. Diese ist im endmontierten Zustand auf einer in den Figuren nicht näher dargestellten Welle angeordnet, beispielsweise einer Antriebswelle eines Elektromotors. Zur Anordnung der Bremsscheibe 3 auf der Welle dient eine Nabe 4. Diese verfügt auf ihrer der Bremsscheibe 3 zugewandten Außenseite über eine Zahngeometrie 5, die im endmontierten Zustand mit einer bremsscheibenseitigen Gegengeometrie 6 zusammenwirkt. Diese Ausgestaltung ermöglicht es, dass die Bremsscheibe 3 auf der Welle axial verschieblich, gleichwohl aber verdrehfest angeordnet ist.

Die Bremse 1 verfügt des Weiteren über eine Ankerplatte 10. Diese ist in axialer Richtung zwischen Magnetgehäuse 7 und Bremsscheibe 3 angeordnet, und zwar gegenüber dem Magnetgehäuse 7 unter Zwischenordnung von Druckfederelementen 17 (vgl. Figur 2) axial verschieblich, gleichwohl aber verdrehfest.

Es ist ferner ein Deckel 11 vorgesehen, der mittels Schrauben 12 verdrehfest am Magnetgehäuse 7 angeordnet ist. Dabei sind - wie insbesondere die Darstellung nach Figur 1 erkennen lässt - die Ankerplatte 10 und die Bremsscheibe 3 in axialer Richtung zwischen dem Magnetgehäuse 7 und dem Deckel 11 angeordnet.

Bei einer Nichtbestromung des Spulenkörpers 8 sorgen die Druckfederelemente 17 dafür, dass die Ankerplatte 10 gegen den Deckel 11 drückt, und zwar unter Einklemmung der Bremsscheibe 3 zwischen der Ankerplatte 10 und dem Deckel 11. Hierdurch entsteht ein Reibschluss, sodass die Bremsscheibe 3 zwischen der Ankerplatte 10 und dem Deckel 11 festgesetzt ist. Eine mit der Bremsscheibe 3 zusammenwirkende Welle ist damit gleichfalls festgesetzt.

Zum Lösen der Bremse 1 ist der Spulenkörper 8 zu bestromen. Infolgedessen kommt es zur Ausbildung eines Magnetfeldes, wodurch die Ankerplatte 10 entgegen der auf die Ankerplatte 10 einwirkenden Druckfederelemente 17 in axialer Richtung bewegt und vom Elektromagneten 2 angezogen wird. Infolgedessen wird die Einklemmung der Bremsscheibe 3 aufgelöst, sodass sich diese in Relation zur Ankerplatte 10 bzw. zum Deckel 11 verdrehen kann, so auch die damit in Wirkverbindung stehende Welle.

Erfindungsgemäß verfügt die Bremse 1 über eine integrierte Steuerelektronik 13. Diese Integration ist im vorliegenden Fall dadurch realisiert, dass die Steuerelektronik 13 von einer Platine 14 getragen ist, die im Ringraum 9 des Magnetgehäuses 7 untergebracht ist. Der Ringraum 9 dient mithin nicht nur der Aufnahme des Spulenkörpers 8, sondern auch der die Steuerelektronik 13 tragenden Platine 14.

Dabei ist die Platine 14 in einem Ringspalt 20 untergebracht, der zwischen dem Spulenkörper 8 einerseits und einem den Ringraum 9 begrenzenden Gehäuseboden 21 ausgebildet ist. Die Platine 14 samt der davon aufgenommenen Steuerelektronik 13 ist damit sicher insbesondere vor mechanischen Einflüssen zwischen dem Gehäuseboden 21 und dem Spulenkörper 8 untergebracht.

Gemäß einer besonderen Ausführungsform der Erfindung kann noch vorgesehen sein, die Steuerelektronik 13 in eine Vergussmasse einzugießen. Dies erbringt einen zusätzlichen Schutz der Steuerelektronik 13, auch vor einem ungewollten Feuchtigkeitseintrag.

Wie insbesondere die Darstellung nach Figur 2 erkennen lässt, ist die Platine 14 kreisringförmig ausgebildet, und zwar im gezeigten Ausführungsbeispiel viertelkreisringförmig.

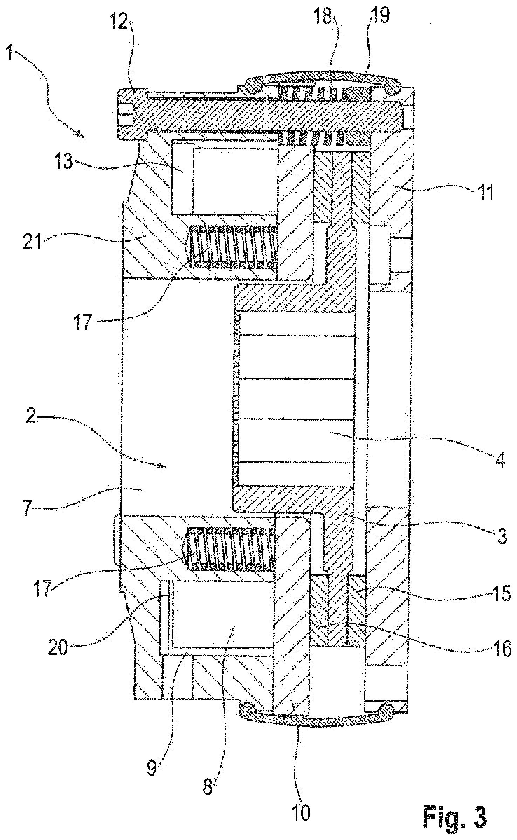

Figur 3 zeigt eine weitere Ausführungsform am Beispiel einer Bremse 1.

Gemäß der Ausführungsform nach Figur 3 kommt eine Bremsscheibe 3 zum Einsatz, die sowohl ankerplattenseitig als auch deckelseitig mit einem Reibbelag 15 bzw. 16 ausgerüstet ist. Darüber hinaus sind Federn 18 zwischen dem Magnetgehäuse 7 und dem Deckel 11 vorgesehen, die in Kombination mit den Schrauben 12 eine exakte Spaltbeabstandung zwischen Deckel 11 und Magnetgehäuse 7 einstellen lassen. Insbesondere zum Schutz vor einem ungewollten Eintrag von Fremdkörpern in das Innere des Magnetgehäuses 7 ist eine den Spaltraum zwischen Magnetgehäuse 7 und Deckel 11 außenumfangsseitig abdeckende Manschette 19 vorgesehen.

Auch die Bremse 1 nach Figur 3 ist in erfindungsgemäßer Weise ausgebildet und verfügt über eine Steuerelektronik 13, die im Ringraum 9 des Magnetgehäuses 7 angeordnet ist. In schon vorbeschriebener Weise ist so ein insgesamt kompakter Aufbau gewährleistet.

Die vorerläuterten Ausführungsformen am Beispiel einer Bremse beschränken die Erfindung nicht. Die erfindungsgemäß vorgesehene Integration einer Steuerelektronik kann nicht nur bei Bremsen, sondern auch bei Kupplungen und/oder Kupplungs-Brems-Kombinationen Verwendung finden. Dabei können sowohl federschließende Kupplungen, Bremsen oder Kupplungs-Brems-Kombinationen als auch elektromagnetisch schließende Kupplungen, Bremsen oder Kupplungs-Brems-Kombinationen vorgesehen sein.

### Bezugszeichen

- 1: Elektromagnetische Bremse
- 2: Elektromagnet
- 3: Bremsscheibe
- 4: Nabe
- 5: Zahngeometrie
- 6: Gegengeometrie
- 7: Magnetgehäuse
- 8: Spulenkörper
- 9: Ringraum
- 10: Ankerplatte
- 11: Deckel
- 12: Schraube
- 13: Steuerelektronik
- 14: Platine
- 15: Reibbelag
- 16: Reibbelag
- 17: Druckfederelement
- 18: Feder
- 19: Manschette
- 20: Ringspalt
- 21: Gehäuseboden

## Patentansprüche

1. Elektromagnetisch betätigbare Kupplung, Bremse oder Kupplungs-Brems-Kombination mit einem Elektromagneten (2), der ein Magnetgehäuse (7) und einen davon aufgenommenen Spulenkörper (8) aufweist, einer auf einer Welle axial verschieblich, gleichwohl aber verdrehfest anordbaren Kupplungs- oder Bremsscheibe (3), einer zwischen dem Magnetgehäuse (7) und der Kupplungs- oder Bremsscheibe (3) angeordneten Ankerplatte (10) und einem verdrehfest am Magnetgehäuse (7) angeordneten Deckel (11), wobei die Ankerplatte (10) und die Kupplungs- oder Bremsscheibe (3) zwischen dem Magnetgehäuse (7) und dem Deckel (11) angeordnet sind, **gekennzeichnet durch** eine integrierte Steuerelektronik (13), wobei das Magnetgehäuse (7) einen Ringraum (9) bereitstellt, der den Spulenkörper (8) beherbergt, wobei die Steuerelektronik (13) vom Ringraum (9) aufgenommen ist.

2. Kupplung, Bremse oder Kupplungs-Brems-Kombination nach Anspruch 1, **dadurch gekennzeichnet, dass** die Steuerelektronik (13) in einem Ringspalt (20) zwischen dem Spulenkörper (8) und einem das Magnetgehäuse (7) begrenzenden Gehäuseboden (21) angeordnet ist.

3. Kupplung, Bremse oder Kupplungs-Brems-Kombination nach Anspruch 1, **dadurch gekennzeichnet, dass** das Magnetgehäuse (7) einen Ringraum (9) bereitstellt, der den Spulenkörper (8) beherbergt, sowie einen zum Ringraum (9) separat ausgebildeten Aufnahmeraum, der der Aufnahme der Steuerelektronik (13) dient.

4. Kupplung, Bremse oder Kupplungs-Brems-Kombination nach Anspruch 3, **dadurch gekennzeichnet, dass** der Aufnahmeraum für die Steuerelektronik (13) in Höhenrichtung der Kupplung, Bremse oder Kupplungs-Brems-Kombination unterhalb oder neben dem Ringraum (9) für den Spulenkörper (8) ausgebildet ist.

5. Kupplung, Bremse oder Kupplungs-Brems-Kombination nach einem der vorhergehenden Ansprüche, **dadurch gekennzeichnet, dass** die Steuerelektronik (13) von einer Platine (14) getragen ist, die kreisringförmig, vorzugsweise viertelkreisringförmig ausgebildet ist.

6. Kupplung, Bremse oder Kupplungs-Brems-Kombination nach einem der vorhergehenden Ansprüche, **dadurch gekennzeichnet, dass** die Steuerelektronik (13) in eine Vergussmasse eingegossen ist.

7. Kupplung, Bremse oder Kupplungs-Brems-Kombination nach Anspruch 6, **dadurch gekennzeichnet, dass** die Vergussmasse aus Kunststoff besteht.

8. Kupplung, Bremse oder Kupplungs-Brems-Kombination nach einem der vorhergehenden Ansprüche, **dadurch gekennzeichnet, dass** die Steuerelektronik (13) an eine Spannungsversorgung und an eine Datenleitung angeschlossen ist, wobei die dafür vorgesehenen Kabel durch eine Öffnung im Magnetgehäuse (7) hindurchgeführt sind.

## Claims

1. Electromagnetically actuated clutch, brake or clutch and brake combination, comprising an electromagnet (2) having a magnet housing (7) and a coil body (8) accommodated by it, a clutch or brake disk (3) arranged on a shaft to be axially movable but rotationally fixed, an armature plate (10) arranged between the magnet housing (7) and the clutch or brake disk (3), and a cover arranged rotationally fixed on the magnet housing (7), wherein the armature plate (10) and the clutch or brake disk (3) are arranged between the magnet housing (7) and the cover (11), **characterized by** integrated control electronics (13), wherein the magnet housing (7) provides an annular space (9) accommodating the coil body (8), wherein the control electronics (8) are received by the annular space (9).

2. Clutch, brake or clutch and brake combination according to claim 1, **characterized in that** the control electronics (13) are arranged in an annular gap (20) between the coil body (8) and housing bottom (21) delimiting the housing.

3. Clutch, brake or clutch and brake combination according to claim 1, **characterized in that** the magnet housing (7) provides an annular space (9) accommodating the coil body (8), as well as a receiving space that is formed separately from the annular space and serves to receive the control electronics (13).

4. Clutch, brake or clutch and brake combination according to claim 3, **characterized in that** the receiving space for the control electronics (13) is formed in the height direction of the clutch, brake or clutch and brake combination below or next to the annular space (9) for the coil body (8).

5. Clutch, brake or clutch and brake combination according to any of the preceding claims, **characterized in that** the control electronics (13) are supported by a circuit board (14) that is formed in a circular or quarter circle shape.

6. Clutch, brake or clutch and brake combination according to any of the preceding claims, **characterized in that** the control electronics (13) are encased in a casting compound.

7. Clutch, brake or clutch and brake combination according to claim 6, **characterized in that** the casting compound consists of plastic.

8. Clutch, brake or clutch and brake combination according to any of the preceding claims, **characterized in that** the control electronics (13) are connected to a voltage supply and to a data line, wherein the cables provided therefor are passed through an opening in the magnet housing (7).

## Revendications

1. Embrayage, frein ou combinaison embrayage-frein à commande électromagnétique, comprenant un électroaimant (2) avec un boîtier d'aimant (7) et un corps de bobine (8) logé dans celui-ci, un disque d'embrayage ou de frein (3) disposé sur un arbre de manière à pouvoir se déplacer axialement mais à être fixe en rotation, une plaque d'armature (10) disposée entre le boîtier magnétique (7) et le disque d'embrayage ou de frein (3), et un couvercle disposé de manière fixe en rotation sur le boîtier d'aimant (7), la plaque d'armature (10) et le disque d'embrayage ou de frein (3) étant disposés entre le boîtier d'aimant (7) et le couvercle (11), **caractérisé par** une électronique de commande intégrée (13), le boîtier d'aimant (7) présentant un espace annulaire (9) recevant le corps de bobine (8), l'électronique de commande (8) étant logée dans l'espace annulaire (9).

2. Embrayage, frein ou combinaison embrayage-frein selon la revendication 1, **caractérisé en ce que** l'électronique de commande (13) est disposée dans un espace annulaire (20) entre le corps de bobine (8) et un fond de boîtier (21) délimitant le boîtier.

3. Embrayage, frein ou combinaison embrayage-frein selon la revendication 1, **caractérisé en ce que** le boîtier d'aimant (7) présente un espace annulaire (9) recevant le corps de bobine (8), ainsi qu'un espace de réception qui est formé séparément de l'espace annulaire et qui sert à recevoir l'électronique de commande (13).

4. Embrayage, frein ou combinaison embrayage-frein selon la revendication 3, **caractérisé en ce que** l'espace de réception pour l'électronique de commande (13) est formé dans le sens de la hauteur de l'embrayage, du frein ou de la combinaison embrayage-frein, en dessous ou à côté de l'espace annulaire (9) pour le corps de bobine (8).

5. Embrayage, frein ou combinaison embrayage-frein selon l'une quelconque des revendications précédentes, **caractérisé en ce que** l'électronique de commande (13) est supportée par une carte de circuit imprimé (14) qui est formée en forme circulaire ou en quart de cercle.

6. Embrayage, frein ou combinaison embrayage-frein selon l'une quelconque des revendications précédentes, **caractérisé en ce que** l'électronique de commande (13) est encapsulée dans une masse de moulage.

7. Embrayage, frein ou combinaison embrayage-frein selon la revendication 6, **caractérisé en ce que** le composé de moulage est constitué de plastique.

8. Embrayage, frein ou combinaison embrayage-frein selon l'une quelconque des revendications précédentes, **caractérisé en ce que** l'électronique de commande (13) est connecté à une alimentation électrique et à une ligne de données, les câbles prévus à cet effet passant à travers une ouverture dans le boîtier d'aimant (7).
